# EUROPEAN PATENT APPLICATION

(11) **EP 1 580 103 A1**
(43) Date of publication of application: **28.09.2005**
(21) Application number: 04075891.4
(22) Date of filing: 23.03.2004
(51) Int. Cl.: B62J 1/18, B62J 1/20

(54) **Assembly for protecting a saddle**

(71) Applicant: Langedijk, Gertrudis Maris, 1075 PK Amsterdam (NL)
(72) Inventor: Langedijk, Gertrudis Maria, 1075 PK Amsterdam (NL); van Aanholt, Alberdina Johanna, 1078 KP Amsterdam (NL)
(74) Representative: du Pont, Jeroen

(57) **Abstract**

The present invention relates to an assembly (1) for protecting a saddle of a bicycle or the like, the assembly (1) at least comprising:
- a flexible, water repellent cover (2) configured to be placed over a saddle;
- a holder (3) for removably containing the cover (2); and
- a connector (5) to attach the cover (2) to a predetermined object.

## Description

The present invention relates to an assembly for protecting a saddle of a bicycle or the like, in particular against precipitation such as rain, hail and snow.

A problem that often occurs when travelling by bicycle is that the saddle (when the bicycle is not in use) becomes wet because of e.g. rain or the like or that the saddle becomes dirty. Cycling on a bicycle with a wet saddle is very uncomfortable and may result in clothes becoming dirty. The above problem is especially pertinent in regions with a lot of rainfall, such as Northwest Europe and China. It goes without saying that also cycling on a dirty saddle is not desirable.

In practice, one has tried to solve the above problem by putting plastic bags over the saddle. However, the bags used are often not properly dimensioned to fit over the saddle resulting in a high wear of the used bags.

Furthermore, it is often forgotten to bring along a bag, such that in case the saddle is wet, no suitable bag is available.

It is an object of the present invention to solve the above or other problems.

It is a further object of the present invention to provide a suitable cover for protecting a saddle, in particular of a bicycle, which cover can be packed into a very small holder.

The above and other objects are achieved according to the present invention by an assembly for protecting a saddle of a bicycle or the like, the assembly at least comprising:
- a flexible, water repellent cover configured to be placed over a saddle;
- a holder for removably containing the cover; and
- a connector to attach the cover to a predetermined object.

A major advantage of the assembly according to the present invention is that the cover is specially adapted to be placed over the intended saddle and therefore doesn't affect the comfort of the saddle in a negative way.

A further advantage of the assembly according to the present invention is that the cover of the assembly can be easily taken along in the special holder of the assembly, which holder preferably has just a small size, such that the cover is not taking to much place. In order to avoid that the assembly is easily forgotten, the assembly also comprises a connector to attach the cover to a predetermined object such as e.g. a handbag or coat.

The assembly according to the present invention can be used for any saddle that is exposed to precipitation, such as a saddle of a bicycle or a motorcycle or even a child's saddle.

The cover may be designed into many different embodiments, provided that the cover can perform its intended object. The cover is at least water repellent, but is preferably also waterproof. The cover may be in the form of a shower cap.

The holder may have any desired shape or design, and is preferably as small as possible. Preferably, the holder itself is also water repellent or waterproof to avoid that - after use of the cover on a wet saddle - e.g. a handbag in which the assembly is placed becomes wet afterwards.

Also, the connector may have various forms.

In use of the assembly, the cover will be taken out of the holder and will be placed over a saddle or the like, which saddle may be wet or dirty. After cycling, the cover will be removed from the saddle and stored again in the holder. Then the holder will be connected to a predetermined object such as a handbag or the like and stored for future use.

As mentioned above, the cover preferably comprises a waterproof plastic material.

This avoids that any precipitation on the saddle will migrate through the cover.

According to a preferred embodiment of the assembly according to the present invention, the cover comprises an elastic ring.

The elastic ring makes it easier to position the cover over the saddle. The elastic ring will usually form the outer edge of the cover.

Further it is preferred that the cover is collapsible.

Also, it is preferred according to the present invention that the holder can be sealed with a fastener, preferably a zipper or Velcro.

According to a further preferred embodiment of the assembly according to the present invention the connector is fixedly connected to the holder. Preferably, the connector comprises a key ring, e.g. a key ring to which the keys of the bicycle lock are connected. This guarantees that one will not forget to take the assembly along when one is travelling by bicycle.

In a further aspect, the present invention relates to the use of the assembly according to the invention, for protecting a saddle or the like against precipitation, and also as a key fob.

In an even further aspect he present invention relates to a cover as described in the assembly according to the invention.

Hereafter, the present invention will be further illustrated by a drawing of a non-limiting embodiment of the assembly. Herein shows:
Figure 1 a schematic cross sectional view of the assembly according to the present invention; and
Figure 2 a schematic cross sectional view of the cover according to the present invention.

Identical reference numbers refer to similar components.

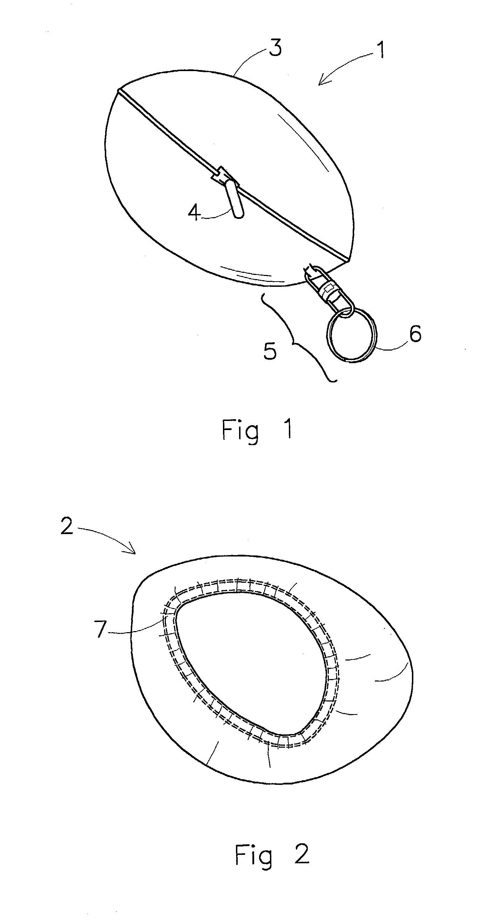

Figure 1 shows a schematic cross sectional view of the assembly 1 according to the present invention. The assembly 1 comprises a flexible, waterproof cover 2 (shown in Fig. 2) which may be made of a suitable plastic or the like. The assembly 1 further comprises a holder 3 for removably containing and storing the cover 2. As shown in Fig. 1, the holder can be sealed with a zipper 4 or any other suitable fastener (such as Velcro, buttons, etc.).

Further, the assembly 1 comprises a connector 5 to attach the cover 2 to a predetermined object such as e.g. a handbag. In the shown embodiment, the connector 5 is fixedly connected to the holder 3 and comprises a key ring 6. In this way the assembly 1 may be used as a key fob. Preferably the key ring 6 is to that end connected to the keys of a cycle lock.

Figure 2 shows a schematic cross sectional view of the cover 2. In the shown embodiment, the cover 2 comprises an elastic ring 7 to simplify the attaching of the cover 2 to a saddle.

In use of the assembly according to Fig. 1 and 2, the cover 2 will be taken out from the holder 3 and placed over a saddle (not shown). After cycling, the cover 2 will be removed from the saddle and stored again in the holder 3.

The person skilled in the art will readily understand that the invention can be modified in various ways, without departing from the scope of the invention.

## Claims

1. Assembly (1) for protecting a saddle of a bicycle or the like, the assembly (1) at least comprising:
- a flexible, water repellent cover (2) configured to be placed over a saddle;
- a holder (3) for removably containing the cover (2); and
- a connector (5) to attach the cover (2) to a predetermined object.

2. Assembly (1) according to claim 1, wherein the cover (2) comprises a waterproof plastic material.

3. Assembly (1) according to claim 1 or 2, wherein the cover (2) comprises an elastic ring (7).

4. Assembly (1) according to any of the preceding claims, wherein the cover (2) is collapsible.

5. Assembly (1) according to any of the preceding claims, wherein the holder (3) can be sealed with a fastener (4), preferably a zipper or Velcro.

6. Assembly (1) according to any of the preceding claims, wherein the connector (5) is fixedly connected to the holder (3).

7. Assembly (1) according to any of the preceding claims, wherein the connector (5) comprises a key ring (6).

8. Use of the assembly (1) according to any of the preceding claims 1-7, for protecting a saddle or the like against precipitation.

9. Use of the assembly (1) according to any of the preceding claims 1-7 as a key fob.

10. Cover (2) as described in the assembly (1) according to any of the preceding claims 1-7.
